# FASCICULE DE BREVET EUROPEEN

(11) **EP 3 673 633 B1**
(45) Date de publication et mention de la délivrance du brevet: **28.07.2021**
(21) Numéro de dépôt: 18755207.0
(22) Date de dépôt: 22.08.2018
(51) Int. Cl.: H04L 29/06, H04L 9/32

(54) **PROCÉDÉ D'AUTHENTIFICATION D'UN UTILISATEUR AUPRÈS D'UN SERVEUR D'AUTHENTIFICATION**
VERFAHREN ZUR AUTHENTIFIZIERUNG EINES BENUTZERS MIT EINEM AUTHENTIFIZIERUNGSSERVER
METHOD FOR AUTHENTICATING A USER WITH AN AUTHENTICATION SERVER

(30) Priorité: 22.08.2017 FR 1757803
(43) Date de publication de la demande: 01.07.2020
(73) Titulaire: Evidian, 78340 Les Clayes sous Bois (FR)
(72) Inventeur: GUIONNEAU, Christophe, 38000 Grenoble (FR)
(74) Mandataire: Cabinet Camus Lebkiri
(86) Numéro de dépôt international: PCT/EP2018/072659
(87) Numéro de publication internationale: WO 2019/038323

(56) Documents cités:
- US-A1- 2013 046 976
- US-A1- 2017 111 170

## Description

### Domaine technique de l'invention

L'invention a pour objet un procédé d'authentification d'un utilisateur auprès d'un serveur d'authentification.

Le domaine de l'invention est celui de l'authentification.

Plus précisément le domaine de l'invention de l'authentification pour les applications ou les portails d'applications web.

Ces applications et portails nécessitent des mécanismes d'authentification à la fois robustes et simple à utiliser pour convenir à différentes population d'utilisateurs. Ces populations sont soit les employés des entreprises soit leurs clients. Certaines opérations, au travers de ces applications, nécessitent un haut niveau d'authentification, comme par exemple les applications permettant des transactions bancaires.

Les mécanismes d'authentification doivent être suffisamment robustes pour certifier que l'utilisateur authentifié n'est pas une identité usurpée.

Les mécanismes d'authentification doivent être suffisamment simples à utiliser pour ne pas dérouter les utilisateurs.

### Etat de la technique antérieur

On connait notamment dans l'état de la technique antérieure le document de brevet US 2017/111170 A1.

Les mécanismes classiques d'authentification reposent sur des identifiants « login » et des mots de passe. La faiblesse de l'utilisation des mots de passe n'est plus à démontrer. Des nouveaux mécanismes d'authentification de type multi-facteurs sont utilisés pour renforcer les mécanismes d'authentification classiques. Le principe des authentifications multi-facteurs reposent sur le principe « ce que je connais ET ce que je possède ». L'objet possédé permet de rajouter un facteur d'authentification, par exemple une clé USB contenant un secret ou un mécanisme de chiffrement par clé privé, une clé ou une application générant des mots de passe non réutilisable (One Time Password ou mot de passe OTP) synchronisés avec un serveur, etc.

D'autres principes multi-facteurs, utilisent le téléphone mobile de l'utilisateur, pour recevoir, un code d'authentification, par mail, par SMS ou par notification push,... L'utilisation du téléphone mobile offre plusieurs avantages :
- L'utilisateur garde son téléphone avec lui en permanence : Il est plus facile d'oublier ou de perdre une clé USB que son téléphone.
- Les téléphones sont toujours chargés (les tokens matériels posent des problèmes de changement de pile)
- Les téléphones possèdent suffisamment de puissance de traitement pour réaliser des opérations de chiffrement complexes.
- Les téléphones ont accès aux réseaux 3G ou wifi, et à Internet

Cependant, les envois de SMS ne sont pas considérés sécurisés car ils passent par l'infrastructure des opérateurs téléphoniques.

De même, les envois de mail posent des problèmes de délais d'acheminement, et ne peuvent pas être utilisés pour protéger l'accès à une messagerie mail.

Encore, les mécanismes d'envois des notifications dépendent des infrastructures des constructeurs des téléphones mobiles. Ces infrastructures proposent leurs propres mécanismes de sécurisation des communications et d'identifications des téléphones, mais l'ensemble des données transite par une infrastructure tierce non-maitrisée. Ces infrastructures de notification, même si elles proposent un coût réduit, voire nul, et des mécanismes de transfert de données entre les serveurs et les téléphones, ne sont utilisable comme mécanisme d'authentification qu'en mettant en œuvre des mécanismes de sécurisation indépendants.

Les mécanismes d'authentification par notifications utilisent les infrastructures de notification tierce de la façon suivante :
- En envoyant dans la charge de la notification, un mot de passe à usage unique d'authentification, comme dans les mécanismes par SMS ;
- Ou en envoyant dans la charge de la notification, des jeux de jetons chiffrés, que seul le téléphone enrôlé peut déchiffrer ;
- Ou en envoyant dans la notification, l'URL du serveur demandant l'authentification et qui sert de point d'accès pour récupérer les données de l'OTP d'authentification ;
- Et en demandant à l'utilisateur d'approuver la notification et donc l'authentification par validation d'un formulaire présentant les données de la demande d'authentification
- Et en se connectant au point d'accès du serveur émetteur de la demande, pour renvoyer la réponse à la demande d'authentification sous la forme d'un OTP sur-chiffré ou déchiffré avec les secrets connus du téléphone enrôlé.

Les problèmes techniques des méthodes précédentes sont liés à la difficulté de construire un principe d'authentification, indépendant de l'infrastructure de notification, des failles de sécurité inhérentes aux téléphones eux-mêmes, et en la sécurisation des communications entre les nombreux serveurs demandant des authentifications et les téléphones.

L'infrastructure de notification ne peut pas être considérées comme sure car elle dépend d'un tiers.

Les identifications des téléphones dans les infrastructures de notification peuvent varier en fonction de paramètres non maitrisés.

Les infrastructures de notifications ne sont pas nécessairement homogènes entre les différents fournisseurs. Leurs caractéristiques peuvent aussi changer dans le temps ; renouvellement des clés d'accès pour les serveurs d'authentifications, évolution des protocoles.

Lors de l'évolution technique de l'infrastructure de notification, ou de l'évolution technique de l'application qui reçoit les notifications, les clés d'API utilisées ou les identifications peuvent changer à l'initiative du fournisseur de l'infrastructure de notification. Si les clés d'API sont utilisée par plusieurs serveurs de plusieurs clients, il est nécessaire de redéployer une nouvelle version contenant les nouvelles clés d'API. Ces clés d'API doivent être conservée de manière sécurisée car elles sont liées à l'application mobile recevant les notifications, la perte de ses clés peut entrainer la mise en péril des mécanismes d'authentification de l'ensemble des utilisateurs de l'application mobile et de tous les clients du service.

Les téléphones ne sont pas considérés comme sûrs car ils peuvent être volés ou utilisés au détriment de l'utilisateur légitime.

Les applications mobiles sont faiblement sécurisées ; par l'utilisation des certificats systèmes qui peuvent être corrompus, par copie des données ou clonage de l'application sur un autre téléphone, ...

L'infrastructure de communication entre les téléphones et les serveurs d'authentification n'est pas considérée comme sure car elle peut passer par des connexions 3G ou wifi non maitrisées. De plus les connexions directes entre les téléphones mobiles et les serveurs d'authentification internes au réseau de l'entreprise, sont souvent impossibles ou source de faille dans le réseau de l'entreprise.

Des services mutualisés dédiés à l'authentification des utilisateurs grâce à leur téléphone mobile existent. Ils sont utilisables grâce à des APIs (WebService ou REST) ou des protocoles de fédération d'identités comme OpenIDConnect ou SAML. Mais ces services doivent connaitre l'identité des utilisateurs et doivent gérer et stocker les secrets échangés avec les téléphones. Les utilisateurs sont donc déclarés et connus d'un service externe à l'entreprise. Ces services posent donc un problème de confidentialités et de responsabilité dans la gestion des utilisateurs. On peut par exemple citer MobileConnect qui est géré par les opérateurs téléphoniques. L'opérateur de ce service connait les utilisateurs nominativement, possède une grande quantité de méta-data sur lui, ainsi que l'intégralité de son historique d'authentification. Les problèmes techniques que l'on cherche à résoudre sont donc:
- Authentifier un utilisateur grâce à son téléphone mobile en lui envoyant une notification ne nécessitant qu'une interaction très simple mais sécurisée pour valider l'authentification ;
- Utiliser les mécanismes d'envois de notifications des fournisseurs de téléphones de manière sécurisée ;
- Fournir un mécanisme qui s'affranchit des contraintes réseau et sécurité des entreprises, en utilisant que des connexions sortantes ;
- Fournir un service mutualisé pour plusieurs clients, tout en garantissant que les authentifications des utilisateurs de chaque client sont traitées de façon cloisonnée. Une parfaite étanchéité est requise entre les données d'authentification de chaque client, les clés d'enrôlements des téléphones des utilisateurs ne sont pas partagées entre les clients ;
- Fournir un service mutualisé d'authentification qui ne possède aucune information sur les utilisateurs qui l'utilisent. La gestion de l'utilisateur et des clés associées à son téléphone est maitrisée par l'entreprise cliente du service ;
- Transmettre depuis un serveur d'authentification qui peut être interne au réseau de l'entreprise, un OTP que seul le téléphone mobile destinataire peut déchiffrer ;
- Transmettre depuis le téléphone mobile de l'utilisateur, l'OTP déchiffré servant de preuve d'identité, au serveur d'authentification qui peut être interne au réseau de l'entreprise ;
- Recevoir sur le serveur d'authentification de l'entreprise, la preuve de l'authentification de l'utilisateur ;

### Exposé de l'invention

L'invention résout ces problèmes en mettant en œuvre un serveur mandataire d'authentification qui ordonnance les communications entre un calculateur, un serveur d'authentification et un serveur de notification.

Les communications entre les différents appareils sont sécurisées par l'utilisation de techniques de chiffrements, par exemple SSL, TLS, ou un équivalent.

L'invention est définie dans la revendication 1.

Avantageusement l'invention peut aussi être combinée avec les caractéristiques suivantes la bi-clé, l'identifiant d'utilisateur sur le serveur mandataire, l'identifiant d'utilisateur sur le serveur de notification sont produits lors d'un enrôlement du calculateur, ledit enrôlement se déroulant comme suit, l'utilisateur ayant à sa disposition le calculateur et un terminal sécurisé connecté au serveur d'authentification :
- L'utilisateur s'enregistre, avec le calculateur, sur le serveur de notification et obtient l'identifiant utilisateur sur le serveur de notification ;
- L'utilisateur utilise le terminal sécurisé pour s'authentifier et émettre un message de demande d'enrôlement vers le serveur d'authentification ;
- Production, par le serveur d'authentification à la réception d'un message de demande d'enrôlement des éléments suivants :
   ∘ Une bi-clé associée à l'utilisateur ;
   ∘ Un message de démarrage d'enrôlement émis vers le serveur mandataire d'authentification ;
- Mise en œuvre, par le serveur mandataire d'authentification à la réception d'un message de démarrage d'enrôlement, des actions suivantes :
   ∘ Création d'un enregistrement associant :
      ▪ Un identifiant d'utilisateur sur le serveur mandataire ;
      ▪ Un jeton d'enrôlement ;
   ∘ Production d'un message d'enrôlement démarré comportant :
      ▪ L'identifiant d'utilisateur sur le serveur mandataire ;
      ▪ Le jeton d'enrôlement ;
   ∘ Emission du message d'enrôlement démarré en réponse au message de démarrage d'enrôlement ;
- Mise en œuvre, par le serveur d'authentification à la réception (3080) d'un message de démarrage d'enrôlement, des actions suivantes :
   ∘ Production d'un message d'acceptation d'enrôlement comportant :
      ▪ Au moins la clé privée de la bi-clé ;
      ▪ Le jeton d'enrôlement ;
   ∘ Emission du message d'acceptation d'enrôlement en réponse au message de demande d'enrôlement ;
- Mise en œuvre, par le terminal sécurisé à la réception d'un message d'acceptation d'enrôlement :
   ∘ Affichage, sur un écran du terminal sécurisé du contenu du message reçu ;
- Acquisition, par le calculateur, de données affichées sur l'écran du terminal sécurisé ;
- Mise en œuvre, par le calculateur suite à l'acquisition des données, des actions suivantes :
   ∘ Création d'un enregistrement associant :
      ▪ Au moins la clé privée de la bi-clé
      ▪ L'identifiant de l'utilisateur sur le serveur de notification
   ∘ Production d'un message de finalisation d'enrôlement comportant
      ▪ Le jeton d'enrôlement ;
      ▪ L'identifiant sur le serveur de notification ;
   ∘ Emission du message de finalisation d'enrôlement vers le serveur mandataire d'authentification ;
- Mise en œuvre, par le serveur mandataire suite à la réception d'un message de finalisation d'enrôlement des actions suivantes :
   ∘ Si un enregistrement correspond au jeton d'enrôlement du message de finalisation alors :
   ▪ Association de l'identifiant sur le serveur de notification avec l'enregistrement correspondant ;
   ▪ Production d'un message d'enrôlement finalisé comportant :
      - L'identifiant sur le serveur mandataire d'authentification de l'enregistrement correspondant ;
   ▪ Emission du message d'enrôlement finalisé en réponse au message de finalisation d'enregistrement ;
   ▪ Emission d'un message de confirmation d'enrôlement vers le serveur d'authentification ;
   ▪ Effacement du jeton d'enrôlement ;
- Mise en œuvre, par le calculateur à la réception d'un message d'enrôlement finalisé des actions suivantes :
   ∘ Association à l'enregistrement correspondant au message de finalisation d'enregistrement de l'identifiant sur le serveur mandataire.

Avantageusement l'invention peut aussi être combinée avec les caractéristiques suivantes : l'accès à des zones mémoire du calculateur est verrouillé par un mécanisme de sécurité local au calculateur.

L'invention sera mieux comprise à la lecture de la description qui suit et à l'examen des figures qui l'accompagnent. Ces figures sont présentées à titre d'exemple nullement limitatif. Sur des figures différentes, des références identiques font références à des éléments identiques. Ce peut être le même élément ou des éléments ayant les mêmes fonctions.

### Brève description des figures

Les figures montrent :
- La figure 1, une illustration de moyens permettant la mise en œuvre de l'invention ;
- La figure 2, une illustration essentiellement chronologique d'étapes du procédé d'authentification, les étapes étant représentées réparties par acteurs ;
- La figure 3, une illustration essentiellement chronologique d'étape d'un procédé d'enrôlement pour la mise en œuvre d'une authentification selon l'invention, les étapes étant représentées réparties par acteurs ;

Pour la désignation des acteurs on utilise la convention suivante :
- C : calculateur ;
- N : serveur de notification ;
- TS : terminal sécurisé ;
- A : serveur d'authentification ;
- MA : serveur mandataire d'authentification.

### Description détaillée d'un mode de réalisation

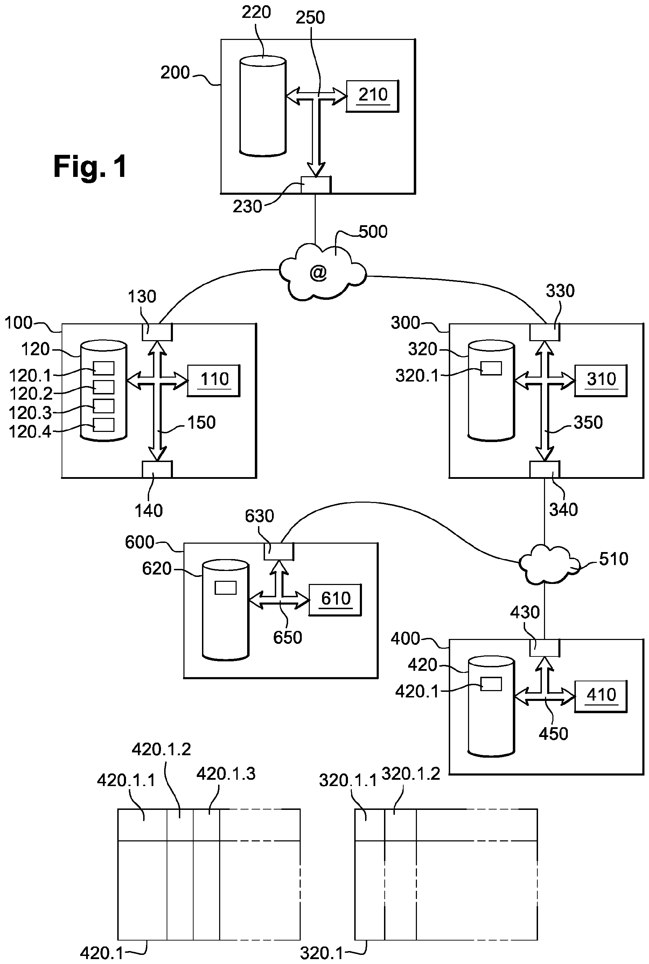

La figure 1 montre un calculateur 100. La figure 1 montre que le calculateur 100 comporte :
- Un microprocesseur 110 ;
- Des moyens 120 de stockage. par exemple un disque dur, une carte mémoire, un composant intégré, ou une partie d'un composant intégré dédié au stockage de donnée ;
- Une interface 130 de communication ;
- Des moyens 140 d'interface homme machine, par exemple un écran tactile. Ces moyens 140 d'interface homme machine peuvent aussi comporter une caméra.

Le calculateur est par exemple un téléphone mobile intelligent. Dans la pratique un calculateur est tout dispositif apte à mettre en œuvre une application utilisant un service de notification. Un service de notification est, par exemple, Firebase Cloud Messaging (anciennement Google Cloud Messaging), Apple Push Notification Service, ou SignalR. Fonctionnellement l'utilisation d'un service de notification permet au calculateur de recevoir des messages en mode « push ».

Le microprocesseur 110 du calculateur, les moyens 120 de stockage du calculateur, l'interface 130 de communication du calculateur et les moyens 140 d'interface homme machine du calculateur sont interconnectés par un bus 150.

D'une manière générale les moyens de stockage peuvent être locaux ou accessibles à distance.

La figure 1 montre un serveur 200 de notifications. Un serveur de notification permet la mise en œuvre d'un service de notification du type de ceux déjà cités. Dans la pratique un service de notifications est mis en œuvre par une architecture plus complexe, mais elle reste assimilable à un serveur.

D'une manière classique un serveur de notifications connait des utilisateurs qu'il identifie par un identifiant d'utilisateur sur le serveur de notifications. Un serveur de notification reçoit des messages comportant au moins un identifiant de destinataire et un contenu. Le serveur de notifications pousse les messages qu'il reçoit vers les destinataires identifiés. Classiquement un message géré par un serveur de notification comporte aussi un identifiant d'émetteur ce qui permet aux destinataires identifiés des messages de traiter les messages.

La figure 1 un montre que le serveur 200 de notifications comporte :
- Un microprocesseur 210 ;
- Des moyens 220 de stockage ;
- Une interface 230 de communication ;

Le microprocesseur 210 du serveur 200 de notification, les moyens 220 de stockage du serveur 200 de notification, l'interface 230 de communication du serveur 200 de notification sont interconnectés par un bus 250.

La figure 1 montre un serveur 300 mandataire d'authentification. Le serveur 300 mandataire permet une isolation forte d'un serveur 400 d'authentification d'une organisation. Grâce au serveur 300 mandataire d'authentification n'est pas connecté directement à un réseau publique et donc ne peut pas être facilement attaqué.

La figure 1 montre que le serveur 300 mandataire d'authentification comporte :
- Un microprocesseur 310 ;
- Des moyens 320 de stockage ;
- Une première interface 330 de communication ;
- Une deuxième interface 340 de communication ;

Le microprocesseur 310 du serveur 300 mandataire d'authentification, les moyens 220 de stockage du serveur 300 mandataire d'authentification, la première interface 330 de communication du serveur 300 mandataire d'authentification et la deuxième interface 340 de communication du serveur 300 mandataire d'authentification sont interconnectés par un bus 350.

La figure 1 montre un serveur 400 d'authentification. La figure 1 montre que le serveur 400 d'authentification comporte :
- Un microprocesseur 410 ;
- Des moyens 420 de stockage ;
- Une interface 430 de communication ;

Le microprocesseur 410 du serveur 400 d'authentification, les moyens 420 de stockage du serveur 400 d'authentification et l'interface 430 de communication du serveur 400 d'authentification sont interconnectés par un bus 450.

La figure 1 montre que l'interface de communication du calculateur 100, l'interface de communication du serveur 200 de notification et la première interface de communication du serveur 300 mandataire d'authentification sont connecté à un premier réseau 500. Dans l'invention le premier réseau 500 est un réseau publique, ou réseau ouvert, par exemple le réseau internet.

La figure 1 montre que la deuxième interface de communication du serveur 300 mandataire et l'interface de communication du serveur 400 d'authentification sont connecté à un deuxième réseau 510. Le deuxième réseau 510 est un réseau privé par opposition au premier réseau 500 publique.

La figure 1 montre que les moyens de stockage du serveur d'authentification comportent plusieurs zones. En particulier, pour l'invention, les moyens 420 de stockage du serveur d'authentification comportent :
- Une zone non représenté pour enregistrer des codes instructions pour la mise en œuvre du procédé selon l'invention ;
- Une zone 420.1 base de données utilisateur. Cette base de données utilisateurs est configurée pour permettre de stocker des enregistrements utilisateur du serveur d'authentification. Un enregistrement utilisateur du serveur d'authentification comporte une pluralité de champs dont au moins :
   ∘ Un champ 420.1.1 identifiant utilisateur sur le serveur d'authentification ;
   ∘ Un champ 420.1.2 Identifiant utilisateur sur le serveur mandataire d'authentification et
   ∘ Un champ 420.1.3 certificat comportant une bi-clé.

Un enregistrement est une association de champs.

Dans cette description on emploie le terme base de données au sens large. Il peut s'agir d'un ou plusieurs fichiers plats de type fichier CSV, d'un ou plusieurs fichiers hiérarchiques de type XML ou JSON, d'un système de base de données relationnel de type SQL ou d'un système de base de données NoSQL. Cette énumération n'est pas exhaustive.

La figure 1 montre que les moyens de stockage du calculateur comportent plusieurs zones. En particulier, pour l'invention, les moyens 120 de stockage du calculateur 100 comportent :
- Une zone non représentée pour enregistrer des codes instructions pour la mise en œuvre du procédé selon l'invention ;
- Une zone 120.1 mémoire pour enregistrer une clé privée d'une bi-clé ;
- Une zone 120.2 mémoire pour enregistrer un identifiant d'utilisateur sur le serveur 200 de notification ;
- Une zone 120.3 mémoire pour enregistrer un identifiant de l'utilisateur sur le serveur 300 mandataire d'authentification ;
- Une zone 120.4 mémoire pour enregistrer une adresse du serveur mandataire d'authentification.

Dans une mise en œuvre de l'invention dans laquelle un utilisateur du calculateur 100 aurait besoin de plusieurs identités. La zone mémoire pour enregistrer une clé privée d'une bi-clé, la zone mémoire pour enregistrer un identifiant d'utilisateur sur le serveur 200 de notification et la zone mémoire pour enregistrer un identifiant de l'utilisateur sur le serveur 300 mandataire d'authentification sont associées dans un enregistrement d'identification. Dans ce cas le calculateur est configuré pour pouvoir enregistrer plusieurs enregistrements d'identification.

La figure 1 montre que les moyens de stockage du serveur mandataire d'authentification comportent plusieurs zones. En particulier, pour l'invention, les moyens de stockage serveur mandataire d'authentification comportent :
- Une zone non représentée pour enregistrer des codes instructions pour la mise en œuvre du procédé selon l'invention ;
- Une zone 320.1 base de données utilisateurs. Cette base de données utilisateurs est configurée pour permettre de stocker des enregistrements utilisateur du serveur mandataire d'authentification. Un enregistrement utilisateur du serveur mandataire d'authentification comporte une pluralité de champs dont au moins :
   ∘ Un champ 320.1.1 identifiant de l'utilisateur sur le serveur mandataire d'authentification ;
   ∘ Un champ 320.1.2 identifiant l'utilisateur sur le serveur de notification.

Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel des codes instructions correspondant à l'application sont enregistrés. Lorsqu'un dispositif, ou une application, émet un message, ce message est émis via une interface de communication dudit dispositif ou de la dite application. Dans ces cas, un dispositif est réel ou virtuel. Dans la pratique un message comporte au moins des données permettant d'identifier émetteur et destinataire.

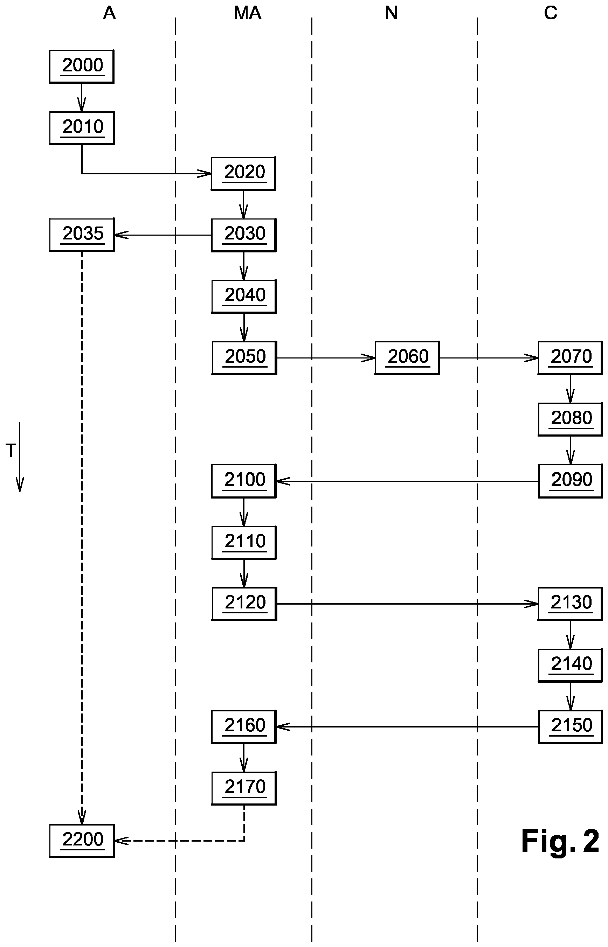

La figure 2 illustre des étapes du procédé selon l'invention pour une authentification forte d'un utilisateur. Dans l'invention l'authentification forte se fait par l'obtention de la preuve de possession et de maîtrise du calculateur précédemment décrit.

La figure 2 montre une étape 2000 préliminaire dans laquelle le serveur d'authentification reçoit un message de demande d'authentification forte d'un utilisateur. Un tel message comporte au moins :
- Un code instruction ;
- Une donnée d'identification de l'utilisateur à authentifier.

Le code instruction permet au serveur d'authentification de déterminer quel traitement appliquer au message reçu. Ce code est facultatif s'il peut être déduit du contexte de réception. Le contexte de réception est, par exemple, le canal par lequel a été reçu le message, ce canal étant dédié à la réception de tel message. Un autre exemple de contexte peut aussi être, le rang du message dans une séquence de message. Par la suite il n'est plus préciser que les messages comportent un code instruction correspondant à leur nom. Il est implicite qu'il est utilisé un mécanisme permettant au destinataire du message de déterminer la nature du message.

Une donnée d'identification du l'utilisateur à authentifier est une données qui permet au serveur d'authentification de retrouver dans la base de données utilisateurs du serveur d'authentification l'enregistrement qui correspond à l'utilisateur à authentifier. Une telle donnée d'identification est donc soit directement un identifiant utilisateur sur le serveur d'authentification, soit une donnée associée à un identifiant utilisateur sur le serveur d'authentification. Une telle donnée est, par exemple, un email par exemple : « u@auth.tld ».

Une fois l'enregistrement d'utilisateur trouvé, le serveur d'authentification passe à une étape 2010 de production d'un message de mise à l'épreuve. Dans l'étape 2010 le serveur d'authentification met en œuvre les actions suivantes :
- Il génère un nombre aléatoire et le chiffre avec la clé public du certificat de l'enregistrement utilisateur trouvé ;
- Il produit un message comportant :
   ∘ Le nombre aléatoire chiffré ;
   ∘ L'identifiant d'utilisateur sur le serveur mandataire d'authentification, cet identifiant étant lu dans l'enregistrement trouvé.
- Il émet le message de mise à l'épreuve vers le serveur mandataire d'authentification.

Dans une variante de l'invention les communications entre le serveur d'authentification et le serveur mandataire d'authentification sont chiffrés, par exemple par l'utilisation du protocole SSL, et/ou soumise à l'utilisation d'un mot de passe ou d'un jeton de connexion. Il en va de même pour toutes les communications décrites, en particulier celles effectués via un réseau public.

Dans une variante de l'invention les identifiants d'utilisateur sur le serveur d'authentification et sur le serveur mandataire d'authentification sont les mêmes.

Dans une étape 2020, le serveur mandataire d'authentification reçoit le message de mise à l'épreuve produit par le serveur d'authentification. Dans cette étape le serveur mandataire d'authentification utilise le contenu du message pour trouver un enregistrement dans la base de données d'utilisateur du serveur mandataire d'authentification. L'enregistrement trouvé est un enregistrement d'utilisateur mandataire.

Le serveur mandataire d'authentification passe alors à une étape 2030 d'un jeton de mise à l'épreuve qu'il associe au message de mise à l'épreuve reçu. Ce jeton de mise à l'épreuve est transmis au serveur d'authentification en réponse au message de mise à l'épreuve.

Dans une étape 2035 le serveur d'authentification reçoit un jeton de mise à l'épreuve en réponse au message de mise à l'épreuve émis. A partir cette réception le serveur d'authentification utilise ce jeton de mise à l'épreuve pour demander, à intervalle régulier, le résultat de la mise à l'épreuve au serveur mandataire d'authentification.

Le serveur mandataire d'authentification passe alors à une étape 2040 de production d'un message de notification, le message de notification comportant :
- L'identifiant de l'utilisateur sur le serveur de notification, cet identifiant étant lu dans l'enregistrement d'utilisateur mandataire trouvé ;
- Un jeton de notification produit pour la circonstance et associé au message de mise à l'épreuve reçu ;

Une fois le message de notification produit le serveur mandataire d'authentification passe à une étape 2050 d'émission du message de notification vers le serveur de notification.

Dans une étape 2060 d'acheminement le serveur de notification prend le message de notification en charge et l'achemine vers le calculateur.

Dans une étape 2070 le calculateur reçoit le message de notification acheminé lors de l'étape d'acheminement.

De l'étape de réception d'un message de notification le calculateur passe à une étape 2080 de production d'un message de prise en charge de la mise à l'épreuve. Un message de prise en charge de mise à l'épreuve comporte les champs suivants :
- Identifiant de l'utilisateur sur le serveur mandataire d'authentification, lu dans les moyens de stockage du calculateur ;
- Identifiant de l'utilisateur sur le serveur de notification ;
- Le jeton de notification, lu dans le message de notification reçu.

Dans une étape 2090 d'émission d'un message de prise en charge d'une épreuve, le calculateur émet le message de prise en charge de l'épreuve produit directement vers le serveur mandataire d'authentification.

Dans une étape 2100 le serveur mandataire d'authentification reçoit le message de prise en charge de mise à l'épreuve. Dans cette étape le serveur mandataire d'authentification utilise le contenu du message de prise en charge de la mise à l'épreuve pour retrouver le message de mise à l'épreuve correspondant. Ce message correspondant a été associé au jeton de notification contenu dans le message de prise en charge de mise à l'épreuve. Le serveur mandataire d'authentification passe alors à une étape 2110 de production d'un message épreuve.

On note que, dans une variante préférée de l'invention, le serveur mandataire d'authentification vérifie toutes les données du message de prise en charge de mise à l'épreuve. Il vérifie en particulier si l'identifiant d'utilisateur sur le serveur mandataire d'authentification correspond bien à celui attendu. Cette donnée n'ayant pas été transmise, seul l'utilisateur ciblé peut la connaître. L'utilisation de cette donnée renforce donc l'authentification. Si cette vérification échoue, le processus d'authentification s'arrête.

Le message épreuve produit comporte au moins:
- Le jeton de notification ;
- L'aléa chiffré reçu via le message de mise à l'épreuve.

Une fois le message épreuve produit le serveur mandataire d'authentification passe à une étape 2120 d'émission du message épreuve directement vers le calculateur. Dans une étape 2130 de réception d'un message épreuve, le calculateur reçoit le message épreuve produit.

Dans une étape 2140 de production d'un message réponse, le calculateur utilise le contenu du message épreuve pour produire un message réponse. Un message réponse comporte au moins :
- Le jeton de notification ;
- Le résultat du déchiffrement par le calculateur de l'aléa chiffré.

Le déchiffrement se fait par une activation de la clé privé enregistrée dans la zone mémoire 120.1 pour enregistrer une clé privée d'une bi-clé. Selon des modes de réalisation de l'invention l'accès à cette clé privé est :
- Soumis à la collecte d'un accord du porteur du calculateur : le porteur doit appuyer sur un bouton dont la sollicitation matérialise son accord. Un tel bouton est présenté conjointement avec un bouton refusé ;
- Soumis au déverrouillage du calculateur, se déverrouillage se faisant par une méthode classique telle que code PIN, reconnaissance faciale, reconnaissance rétinienne, empreinte digitale...
- Soumis à un déverrouillage spécifique de la clé par l'une des méthodes précédemment citée.

Dans une étape 2150 d'émission du message réponse, le calculateur émet le message réponse produit directement vers le serveur mandataire d'authentification.

Dans une étape 2160 de réception d'un message réponse, le serveur mandataire d'authentification reçoit le message réponse produit. Dans une étape 2170 d'association, suivant l'étape 2160 de réception, le serveur mandataire d'authentification utilise le contenu du message, en particulier le jeton de notification pour associer le résultat du déchiffrement au jeton de mise à l'épreuve. Ainsi il pourra répondre aux sollicitations périodiques du serveur d'authentification.

Dans une étape 2200 de comparaison, mise en œuvre par le serveur d'authentification suite à une réponse reçue à l'une de ses interrogations périodiques, le serveur d'authentification compare le résultat du déchiffrement présent dans la réponse reçue avec l'aléa qu'il a produit au début du processus d'authentification. Si les deux valeurs sont égales alors l'authentification a réussi, sinon l'authentification a échoué.

Dans une variante préférée de l'invention les communications directes entre le calculateur et le serveur mandataire d'authentification sont chiffrés, par exemple en utilisant le protocole SSL.

La figure 1 montre un terminal 600 sécurisé. La figure 1 montre que le terminal 600 sécurisé comporte :
- Un microprocesseur 610 ;
- Des moyens 620 de stockage ;
- Une interface 630 de communication ;

Le microprocesseur 610 du terminal 600 sécurisé, les moyens 620 de stockage du terminal 600 sécurisé et l'interface 630 de communication terminal 600 sécurisé sont interconnectés par un bus 650.

La figure 1 montre que le terminal sécurisé est connecté au deuxième réseau privé. Le terminal sécurisé est donc connecté au même réseau que le serveur d'authentification. Dans une variante de l'invention le calculateur peut agir comme terminal sécurisé s'il est connecté au deuxième réseau privé, par exemple via une borne wifi de ce réseau. Dans une autre variante le terminal sécurisé est un ordinateur fixe ou portable connecté au deuxième réseau privé.

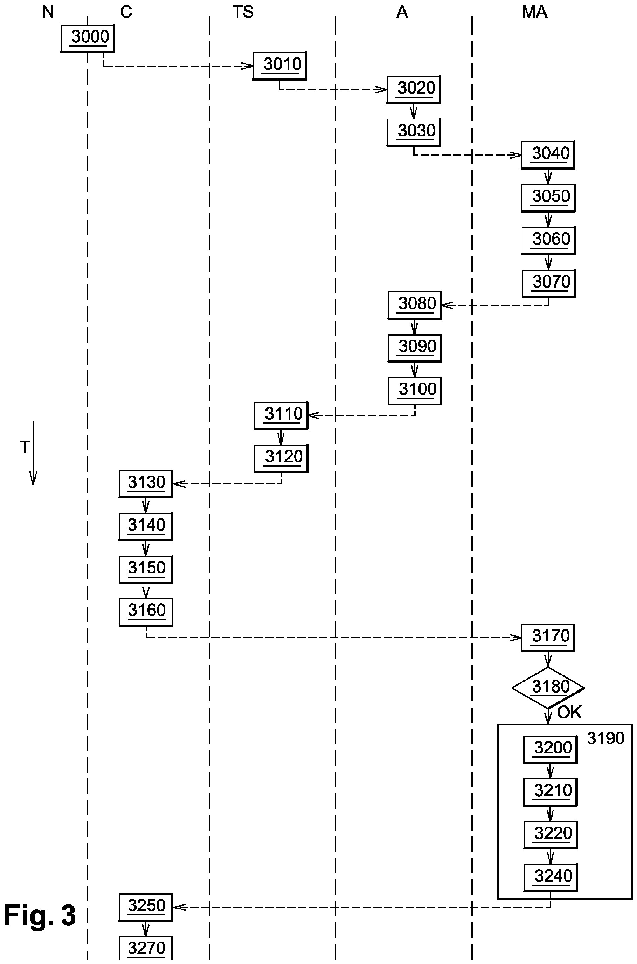

La figure 3 montre une étape 3000 d'enregistrement du calculateur sur le serveur de notification. Au cours de cet enregistrement le calculateur obtient l'identifiant de l'utilisateur sur le serveur de notification. C'est donc dans cette étape que le calculateur met à jour zone 120.2 mémoire pour enregistrer un identifiant d'utilisateur sur le serveur 200 de notification. Pour l'utilisateur cela revient à se créer un compte sur le serveur de notification afin de pouvoir utiliser le service de notification.

La figure 3 montre une étape 3010 dans laquelle le terminal sécurisé est utilisé pour produire un message de demande d'enrôlement. Ce message peut être produit à condition que l'utilisateur se soit authentifié sur le serveur d'authentification. Cette authentification a lieu au moment d'une ouverture de session sur le terminal sécurisé, ou au moment de la connexion à un réseau wifi. Une fois le message de demande d'enrôlement produit il est émis à destination du serveur d'authentification via le deuxième réseau privé.

La figure 3 montre une étape 3020 dans laquelle le serveur d'authentification reçoit un message de demande d'enrôlement. Ce message lui permet d'identifier un utilisateur dans sa base de données d'utilisateurs. En effet pour qu'un tel message puisse être émis il faut que son émetteur se soit préalablement authentifier. Les données du message permettant d'identifier l'émetteur permettent donc aussi de trouver un utilisateur dans la base de données d'utilisateur.

Le serveur d'authentification passe alors à une étape 3030 dans laquelle il effectue les actions suivantes :
- Production d'une bi-clé qu'il associe à l'utilisateur identifié par le message de demande d'enrôlement ;
- Production d'un message de démarrage d'enrôlement qu'il émet vers le serveur mandataire d'authentification.

La figure 3 montre une étape 3040 de réception d'un message de démarrage d'enrôlement dans laquelle le serveur mandataire d'authentification reçoit le message de demande d'enrôlement émis par le serveur d'authentification. A la réception du message de démarrage d'enrôlement le serveur mandataire d'authentification effectue les actions correspondant aux étapes suivantes :
- Une étape 3050 de création d'un enregistrement dans sa base de données d'utilisateur. Cette production inclut la création d'un identifiant d'utilisateur sur le serveur mandataire d'authentification. Le serveur mandataire d'authentification associe à ce nouvel enregistrement un jeton d'enrôlement.
- Une étape 3060 de production d'un message d'enrôlement démarré, ce message comportant :
   ∘ L'identifiant d'utilisateur sur le serveur mandataire d'authentification de l'enregistrement créé ;
   ∘ Le jeton d'enrôlement associé à l'enregistrement créé.
- Une étape 3070 d'émission d'un message d'enrôlement démarré dans laquelle le serveur mandataire d'authentification émet le message d'enrôlement démarré en réponse au message de démarrage d'enrôlement.

La figure 1 montre une étape 3080 de réception d'un message d'enrôlement démarré dans laquelle le serveur d'authentification reçoit le message d'enrôlement démarré émis.

De l'étape 3080 de réception d'un message d'enrôlement démarré le serveur mandataire d'authentification passe à une étape 3090 de production d'un message d'acceptation d'enrôlement comportant :
- Au moins la clé privée de la bi-clé précédemment produite ;
- Le jeton d'enrôlement contenu dans le message d'enrôlement démarré.

Une fois le message d'acception d'enrôlement produit le serveur mandataire passe à une étape 3100 d'émission d'un message d'acceptation d'enrôlement dans laquelle il émet le message d'acceptation d'enrôlement à destination du terminal sécurisé. Ce message d'acceptation d'enrôlement est une réponse au message de demande d'enrôlement émis par le terminal sécurisé.

La figure 3 montre une étape 3110 de réception d'un message d'acception d'enrôlement par le terminal sécurisé. Dans cette étape le terminal sécurisé reçoit le message d'acceptation d'enrôlement émis par le serveur mandataire. Le terminal sécurisé passe alors à une étape 3120 d'affichage sur un écran du terminal sécurisé des informations contenues dans le message d'acceptation d'enrôlement. Ces informations sont affichées, par exemple, sous la forme d'un QR Code. Dans une autre variante les informations sont affichées en mode texte.

La figure 3 montre une étape 3130 d'acquisition par le calculateur des informations affichées sur l'écran du terminal sécurisé. L'acquisition mise en œuvre dépend du mode d'affichage utilisé.

Une fois les données acquises le calculateur met en œuvre les étapes suivantes :
- Une étape 3140 de création d'un enregistrement associant la clé privé de la bi-clé acquise, c'est-à-dire la mise à jour de la zone (120.1) mémoire pour stocker la clé privée de la bi-clé du calculateur.
- Une étape 3150 de production d'un message de finalisation d'enrôlement comportant au moins :
   ∘ Le jeton d'enrôlement acquis
   ∘ L'identifiant de l'utilisateur sur le serveur de notification, c'est-à-dire le contenu de la zone 120.2 mémoire pour stocker un identifiant de l'utilisateur sur un serveur de notifications du calculateur.
- Une étape 3160 d'émission d'un message de finalisation d'enrôlement dans laquelle le calculateur émet le message de finalisation d'enrôlement vers le serveur mandataire d'authentification.

La figure 3 montre une étape 3170 de réception par le serveur mandataire d'authentification d'un message de finalisation d'enrôlement dans laquelle le serveur mandataire d'authentification reçoit le message de finalisation d'enrôlement émis par le calculateur. Suite à cette réception le serveur mandataire d'authentification recherche, dans une étape 3180, dans sa base de données d'utilisateur un enregistrement associé au jeton d'enrôlement contenu dans le message de finalisation d'enrôlement reçu. Si un tel enregistrement est trouvé alors le serveur mandataire d'authentification passe à une étape 3190 de traitement du message de finalisation d'enrôlement reçu en mettant en œuvre les étapes suivantes :
- Une étape 3200 de mise à jour de l'enregistrement trouvé avec l'identifiant d'utilisateur sur le serveur de notification contenu dans le message de finalisation d'enrôlement reçu ;
- Une étape 3210 de production d'un message d'enrôlement finalisé comportant :
   ∘ L'identifiant d'utilisateur sur le serveur mandataire d'authentification de l'enregistrement trouvé ;
- Une étape 3220 d'émission d'un message d'enrôlement finalisé dans laquelle il émet le message d'enrôlement finalisé en réponse au message de finalisation d'enregistrement, c'est-à-dire vers le calculateur ;
- Une étape 3230 d'un message de confirmation d'enrôlement vers le serveur d'authentification ;
- Une étape 3240 d'effacement du jeton d'enrôlement dans laquelle il supprime le jeton d'enrôlement de tel sorte qu'il ne puisse être réutilisé.

Dans un pratique un jeton est un identifiant à usage unique ayant une durée de vie limitée dans le temps.

La figure 3 montre une étape 3250 de réception, par le calculateur, d'un message d'enrôlement finalisé dans laquelle le calculateur reçoit le message d'enrôlement finalisé émis. Le calculateur passe alors à une étape 3270 de traitement d'un message d'enrôlement finalisé dans lequel il traite le message d'enrôlement finalisé reçu en effectuant l'action suivante :
- Association à l'enregistrement correspondant au message de finalisation d'enrôlement de l'identifiant d'utilisateur sur le serveur mandataire d'authentification contenu dans le message d'enrôlement finalisé. Cela revient à mettre à jour la zone mémoire (120.3) pour stocker un identifiant de l'utilisateur sur le serveur mandataire d'authentification du calculateur. On notre que l'enregistrement mis à jour correspond également au message d'enrôlement finalisé reçu car le message reçu est une réponse au message de finalisation d'enrôlement.

A ce moment l'enrôlement est terminé est le calculateur peut être utilisé comme moyen d'authentification.

Avec l'invention, les utilisateurs disposent d'un moyen d'authentification fort basé sur la possession d'un calculateur, par exemple un téléphone mobile, et ne demandant que peu d'interaction.

Parmi les avantages techniques et problèmes résolus on peut citer :
- L'utilisateur utilise son mobile et l'application pour enrôler dans plusieurs Système d'Information, ou plusieurs serveurs d'authentification indépendants. Eventuellement en utilisant une pluralité d'identités.
- Au moment où l'utilisateur s'authentifie, une simple notification demande une confirmation, et permet de finaliser l'authentification.
- C'est un moyen d'authentification multi-facteur de type « ce que je possède » ; le téléphone enrôlé, et « ce que je connais » ; le moyen de déverrouiller l'usage des clés ; PIN code, empreintes,...
- Le système d'information de l'entreprise contrôle qui s'authentifie et peut révoquer les moyens d'authentification de l'utilisateur à tout moment.
- Le serveur d'authentification de l'entreprise n'est pas nécessairement visible depuis l'extérieur de l'entreprise.
- Le serveur d'authentification de l'entreprise n'a pas de lien technique contraignant avec les infrastructures de notification des fournisseurs de téléphones, ni avec l'application mobile.
- Les utilisateurs sont entièrement gérés par les serveurs d'authentification de l'entreprise, le serveur mandataire ne connait pas les utilisateurs.
- Le système est mutualisé pour plusieurs clients et les données d'authentification sont parfaitement cloisonnées. Les clés utilisées sont sécurisées dans le téléphone et dans les serveurs d'authentification de l'entreprise.
- L'application mobile et le serveur mandataire peuvent avoir des cycles de vie complétement indépendants des serveurs d'authentification internes aux entreprises. L'application mobile et le serveur mandataire évoluent techniquement pour s'adapter aux évolutions des fournisseurs de services de notification, sans impact sur les serveurs d'authentifications clients.
- Les mécanismes de chiffrements et de jeton assurent que ni les fournisseurs de service de notification ni le serveur mandataire ne peuvent intercepter des données ou usurper des authentifications ou des identités.
- Le principe s'applique indifféremment à l'authentification d'application Web ou des applications non-web, qu'elles soient visibles ou non sur Internet. Le principe peut aussi s'appliquer, par exemple, à un mécanisme d'authentification sur un poste de travail.

## Revendications

1. Procédé d'authentification d'un utilisateur auprès d'un serveur (400) d'authentification, dans lequel le serveur d'authentification comporte :
- Une zone mémoire pour stocker un enregistrement associant :
∘ Un identifiant (420.1) de l'utilisateur sur le serveur d'authentification ;
∘ Un identifiant (420.2) de l'utilisateur sur un serveur mandataire d'authentification;
∘ Une clé publique d'une bi-clé (420.3);
le procédé permettant d'authentifier l'utilisateur ayant à sa disposition un calculateur (100) comprenant :
- Une zone (120.1) mémoire pour stocker la clé privée de la bi-clé ;
- Une zone (120.2) mémoire pour stocker un identifiant de l'utilisateur sur un serveur (200) de notifications ;
- Une zone mémoire (120.3) pour stocker un identifiant de l'utilisateur sur le serveur mandataire d'authentification ;
l'authentification se faisant par l'intermédiaire du serveur (300) mandataire d'authentification comprenant :
- Une zone (320.1) mémoire pour stocker un enregistrement associant :
∘ L'identifiant (320.1.1) de l'utilisateur sur le serveur mandataire d'authentification ;
∘ L'identifiant (320.1.2) de l'utilisateur sur le serveur de notification
le procédé comportant les étapes suivantes :
- Production (2000), par le serveur d'authentification, d'un message de mise à l'épreuve comportant :
∘ Un aléa chiffré avec la clé publique
∘ L'identifiant de l'utilisateur sur le serveur mandataire d'authentification
- Emission (2010) du message de mise à l'épreuve, par le serveur d'authentification, vers le serveur de notification, le serveur d'authentification recevant en réponse un jeton de mise à l'épreuve du serveur mandataire d'authentification ;
- Production (2030 - 2040), par le serveur mandataire d'authentification à la réception (2020) du message de mise à l'épreuve émis par le serveur d'authentification :
∘ (2030) Du jeton de mise à l'épreuve, le jeton de mise à l'épreuve étant associé au message de mise à l'épreuve ;
∘ (2040) D'un message de notification comportant :
▪ L'identifiant de l'utilisateur sur le serveur de notification ;
▪ Un jeton de notification, produit par le serveur mandataire d'authentification, le jeton de notification étant associé, sur le serveur mandataire d'authentification au message de mise à l'épreuve ;
- Emission (2050) du message de notification, par le serveur mandataire d'authentification, vers le serveur de notification ;
- Acheminement (2060) du message de notification par le serveur de notification vers le calculateur ;
- Production (2080) par le calculateur, à la réception (2070) du message de notification d'un message de prise en charge de l'épreuve, le message de prise en charge de l'épreuve comportant :
∘ L'identifiant de l'utilisateur sur le serveur mandataire d'authentification ;
∘ L'identifiant de l'utilisateur sur le serveur de notification ;
∘ Le jeton de de notification ;
- Emission (2090) par le calculateur du message de prise en charge de l'épreuve vers le serveur mandataire d'authentification ;
- Production (2110) par le serveur mandataire d'authentification, à la réception (2100) du message de prise en charge de l'épreuve, d'un message épreuve comportant :
∘ L'aléa chiffré retrouvé grâce au contenu du message de prise en charge de l'épreuve ;
- Emission (2120) par le serveur mandataire d'authentification du message épreuve vers le calculateur ;
- Production (2140) par le calculateur, à la réception (2130) du message épreuve, d'un message réponse comportant :
∘ Le résultat du déchiffrement de l'aléa chiffré par l'utilisation de la clé privé ;
- Emission (2150) par le calculateur du message réponse vers le serveur mandataire d'authentification ;
- Association (2170) par le serveur mandataire d'authentification, à la réception (2160) du message de réponse, du résultat du déchiffrement et du jeton de mise l'épreuve ;
- Interrogation (2035) par le serveur d'authentification du serveur mandataire d'authentification pour obtenir le contenu du message de réponse associé au jeton de mise à l'épreuve ;
- Comparaison (2200) par le serveur d'authentification du contenu du message de réponse avec l'aléa produit pour déterminer le résultat de l'authentification.

2. Procédé d'authentification selon la revendication 1, **caractérisé en ce que** la bi-clé, l'identifiant d'utilisateur sur le serveur mandataire, l'identifiant d'utilisateur sur le serveur de notification sont produits lors d'un enrôlement du calculateur, ledit enrôlement se déroulant comme suit, l'utilisateur ayant à sa disposition le calculateur et un terminal sécurisé connecté au serveur d'authentification :
- L'utilisateur s'enregistre (3000), avec le calculateur, sur le serveur de notification et obtient l'identifiant utilisateur sur le serveur de notification ;
- L'utilisateur utilise (3010) le terminal sécurisé pour s'authentifier et émettre un message de demande d'enrôlement vers le serveur d'authentification ;
- Production (3030), par le serveur d'authentification à la réception (3020) d'un message de demande d'enrôlement des éléments suivants :
∘ Une bi-clé associée à l'utilisateur ;
∘ Un message de démarrage d'enrôlement émis vers le serveur mandataire d'authentification ;
- Mise en œuvre, par le serveur mandataire d'authentification à la réception (3040) d'un message de démarrage d'enrôlement, des actions suivantes :
∘ Création (3050) d'un enregistrement associant :
▪ Un identifiant d'utilisateur sur le serveur mandataire ;
▪ Un jeton d'enrôlement ;
∘ Production (3060) d'un message d'enrôlement démarré comportant :
▪ L'identifiant d'utilisateur sur le serveur mandataire ;
▪ Le jeton d'enrôlement ;
∘ Emission (3070) du message d'enrôlement démarré en réponse au message de démarrage d'enrôlement ;
- Mise en œuvre, par le serveur d'authentification à la réception (3080) d'un message de démarrage d'enrôlement, des actions suivantes :
∘ Production (3090) d'un message d'acceptation d'enrôlement comportant :
▪ Au moins la clé privée de la bi-clé ;
▪ Le jeton d'enrôlement ;
∘ Emission (3100) du message d'acceptation d'enrôlement en réponse au message de demande d'enrôlement ;
- Mise en œuvre, par le terminal sécurisé à la réception (3110) d'un message d'acceptation d'enrôlement :
∘ Affichage (3120), sur un écran du terminal sécurisé du contenu du message reçu ;
- Acquisition (3130), par le calculateur, de données affichées sur l'écran du terminal sécurisé ;
- Mise en œuvre, par le calculateur suite à l'acquisition (3130) des données, des actions suivantes :
∘ Création (3140) d'un enregistrement associant :
▪ Au moins la clé privée de la bi-clé
▪ L'identifiant de l'utilisateur sur le serveur de notification
∘ Production (3150) d'un message de finalisation d'enrôlement comportant
▪ Le jeton d'enrôlement ;
▪ L'identifiant sur le serveur de notification ;
∘ Emission (3160) du message de finalisation d'enrôlement vers le serveur mandataire d'authentification ;
- Mise en œuvre, par le serveur mandataire suite à la réception (3170) d'un message de finalisation d'enrôlement des actions suivantes :
∘ Si (3180) un enregistrement correspond au jeton d'enrôlement du message de finalisation alors (3190) :
▪ Association (3200) de l'identifiant sur le serveur de notification avec l'enregistrement correspondant ;
▪ Production (3210) d'un message d'enrôlement finalisé comportant :
• L'identifiant sur le serveur mandataire d'authentification de l'enregistrement correspondant ;
▪ Emission (3220) du message d'enrôlement finalisé en réponse au message de finalisation d'enregistrement ;
▪ Emission (3230) d'un message de confirmation d'enrôlement vers le serveur d'authentification ;
▪ Effacement du jeton d'enrôlement ;
- Mise en œuvre, par le calculateur à la réception (3250) d'un message d'enrôlement finalisé des actions suivantes :
∘ Association (3270) à l'enregistrement correspondant au message de finalisation d'enregistrement de l'identifiant sur le serveur mandataire.

3. Procédé d'authentification selon l'une des revendications précédentes **caractérisé en ce que** l'accès à des zones mémoire du calculateur est verrouillé par un mécanisme de sécurité local au calculateur.

## Patentansprüche

1. Verfahren zur Authentifizierung eines Benutzers mit einem Authentifizierungsserver (400), wobei der Authentifizierungsserver Folgendes umfasst:
- einen Speicherbereich zum Speichern einer Registrierung, zugeordnet
∘ einer Kennung (420.1) des Benutzers auf dem Authentifizierungsserver;
∘ einer Kennung (420.2) des Benutzers auf einem Authentifizierungs-Proxyserver;
∘ einem öffentlichen Schlüssel eines Schlüsselpaars (420.3);
wobei das Verfahren zur Authentifizierung des Benutzers, dem ein Rechner (100) zur Verfügung steht, Folgendes umfasst:
- einen Speicherbereich (120.1) zum Speichern des privaten Schlüssels des Schlüsselpaars;
- einen Speicherbereich (120.2) zum Speichern einer Benutzerkennung auf einem Benachrichtigungsserver (200);
- einen Speicherbereich (120.3) zum Speichern einer Benutzerkennung auf dem Authentifizierungs-Proxyserver;
wobei die Authentifizierung mittels des Authentifizierungs-Proxyservers (300) erfolgt, der Folgendes umfasst:
- einen Speicherbereich (320.1) zur Speicherung einer Registrierung, zugeordnet:
∘ der Kennung (320.1.1) des Benutzers auf dem Authentifizierungs-Proxyserver;
∘ der Kennung (320.1.2) des Benutzers auf einem Benachrichtigungsserver, wobei das Verfahren die folgenden Schritte umfasst:
- Generierung (2000), durch den Authentifizierungsserver, einer Testmitteilung, umfassend:
∘ einen mit dem öffentlichen Schlüssel verschlüsselten Zufallswert
∘ die Benutzerkennung auf dem Authentifizierungs-Proxyserver
- Senden (2010) der Testmitteilung durch den Authentifizierungsserver an den Benachrichtigungsserver, wobei der Authentifizierungsserver als Antwort ein Test-Token von dem Authentifizierungs-Proxyserver empfängt;
- Generierung (2030 - 2040), durch den Authentifizierungs-Proxyserver beim Empfang (2020) der vom Authentifizierungs-Server gesendeten Testmitteilung:
∘ (2030) des Test-Token, wobei das Test-Token der Testmitteilung zugeordnet ist;
∘ (2040) einer Benachrichtigungsmitteilung, umfassend:
▪ die Benutzerkennung auf dem Benachrichtigungsserver;
▪ einen Benachrichtigungs-Token, das vom Authentifizierungs-Proxyserver erzeugt wird, wobei das Benachrichtigungs-Token auf dem Authentifizierungs-Proxyserver der Testmitteilung zugeordnet ist;
- Senden (2050) der Benachrichtigungsmitteilung vom Authentifizierungs-Proxyserver an den Benachrichtigungsserver;
- Weiterleitung (2060) der Benachrichtigungsmitteilung vom Benachrichtigungsserver an den Rechner;
- Generierung (2080), durch den Rechner beim Empfang (2070) der Benachrichtigungsmitteilung, einer Testübernahmemitteilung, wobei die Testübernahmemitteilung Folgendes umfasst:
∘ die Benutzerkennung auf dem Authentifizierungs-Proxyserver;
∘ die Benutzerkennung auf dem Benachrichtigungsserver;
∘ das Benachrichtigungs-Token;
- Senden (2090), durch den Rechner, der Testübernahmemitteilung an den Authentifizierungs-Proxyserver;
- Generierung (2110), durch den Authentifizierungs-Proxyserver beim Empfang (2100) der Testübernahmemitteilung, einer Testmitteilung, umfassend:
∘ den verschlüsselten Zufallswert, der dank des Inhalts der Testübernahmemitteilung gefunden wurde;
- Senden (2120) durch den Authentifizierungs-Proxyserver der Testmitteilung an den Rechner;
- Generierung (2140), durch den Rechner beim Empfang (2130) der Testmitteilung einer Antwortmitteilung, umfassend:
∘ das Ergebnis der Entschlüsselung des verschlüsselten Zufallswertes mittels des privaten Schlüssels;
- Senden (2150), durch den Rechner, der Antwortmitteilung an den Authentifizierungs-Proxyserver;
- Zuordnung (2170), durch den Authentifizierungs-Proxyserver, beim Empfang (2160) der Antwortmitteilung, des Entschlüsselungsergebnisses und des Abfrage-Tokens;
- Abfrage (2035), durch den Authentifizierungsserver des Authentifizierungs-Proxyservers, um den Inhalt der Antwortmitteilung zu erhalten, die dem Test-Token zugeordnet ist;
- Vergleich (2200), durch den Authentifizierungsserver, des Inhalts der Antwortmitteilung mit dem erzeugten Zufallswert, um das Ergebnis der Authentifizierung zu ermitteln.

2. Authentifizierungsverfahren nach Anspruch 1, **dadurch gekennzeichnet, dass** das Schlüsselpaar die Benutzerkennung auf dem Proxyserver, die Benutzerkennung auf dem Benachrichtigungsserver während einer Anmeldung des Rechners erzeugt werden, wobei die Anmeldung wie folgt erfolgt, wobei der Benutzer über den Rechner und ein gesichertes Endgerät verfügt, das mit dem Authentifizierungsserver verbunden ist:
- Der Benutzer registriert sich (3000) mit dem Rechner auf dem Benachrichtigungsserver und erhält die Benutzerkennung auf dem Benachrichtigungsserver;
- Der Benutzer verwendet (3010) das gesicherte Endgerät, um sich zu authentifizieren und eine Anmeldungsanforderungsmitteilung an den Authentifizierungsserver zu senden;
- Generierung (3030), durch den Authentifizierungs-Proxyserver beim Empfang (3020) einer Anmeldungsanforderungsmitteilung der folgenden Elemente:
∘ ein dem Benutzer zugeordnetes Schlüsselpaar;
∘ eine an den Authentifizierungs-Proxyserver gesendete Anmeldungsstartmitteilung;
- Ausführung, durch den Authentifizierungs-Proxyserver beim Empfang (3040) einer Anmeldungsstartmitteilung, der folgenden Vorgänge :
∘ Erzeugung (3050) einer Registrierung, zugeordnet:
▪ einer Benutzerkennung auf dem Proxyserver;
▪ einem Anmeldungs-Token;
∘ Generierung (3060) einer gestarteten Anmeldungsmitteilung, umfassend:
▪ die Benutzerkennung auf dem Proxyserver;
▪ das Anmeldungs-Token;
∘ Senden (3070) der gestarteten Anmeldungsmitteilung als Antwort auf die Anmeldungsstartmitteilung;
- Ausführung, durch den Authentifizierungsserver beim Empfang (3080) einer Anmeldungsstartmitteilung, der folgenden Vorgänge :
∘ Generierung (3090) einer Anmeldungsannahmemitteilung, umfassend:
▪ mindestens den privaten Schlüssel des Schlüsselpaars;
▪ das Anmeldungs-Token;
∘ Senden (3100) der Anmeldungsannahmemitteilung als Antwort auf die Anmeldungsanforderungsmitteilung;
- Ausführung, durch das gesicherte Endgerät beim Empfang (3110) einer Anmeldungsannahmemitteilung:
∘ Anzeige (3120), auf dem Bildschirm des gesicherten Endgeräts des empfangenen Mitteilungsinhalts;
- Erfassung (3130), durch den Rechner, von auf dem Bildschirm des gesicherten Endgeräts angezeigten Daten;
- Ausführung, durch den Rechner nach der Erfassung (3130) der Daten, der folgenden Vorgänge:
∘ Erzeugung (3140) einer Registrierung, zugeordnet:
▪ mindestens dem privaten Schlüssel des Schlüsselpaars
▪ der Benutzerkennung auf dem Benachrichtigungsserver
∘ Generierung (3150) einer Anmeldungsabschlussmitteilung, umfassend:
▪ das Anmeldungs-Token;
▪ die Kennung auf dem Benachrichtigungsserver;
∘ Senden (3160) der Anmeldungsabschlussmitteilung an den Authentifizierungs-Proxyserver;
- Ausführung, durch den Authentifizierungs-Proxyserver beim Empfang (3170) einer Anmeldungsabschlussmitteilung, der folgenden Vorgänge:
∘ Wenn (3180) eine Registrierung dem Anmeldungs-Token des Abschlussmitteilung entspricht, dann (3190):
▪ Zuordnung (3200) der Kennung auf dem Benachrichtigungsserver mit der entsprechenden Registrierung;
▪ Generierung (3210) einer abgeschlossenen Anmeldungsmitteilung, umfassend:
• die Kennung auf dem Authentifizierungs-Proxyserver der entsprechenden Registrierung;
▪ Senden (3220) der abgeschlossenen Anmeldungsmitteilung als Antwort auf die Anmeldungsabschlussmitteilung;
▪ Senden (3230) einer Anmeldungsbestätigungsmitteilung an den Authentifizierungsserver;
▪ Löschung des Anmeldungs-Tokens;
- Ausführung, durch den Rechner beim Empfang (3250) einer abgeschlossenen Anmeldungsmitteilung, der folgenden Vorgänge:
∘ Zuordnung (3270) der Registrierung, die der Anmeldungsabschlussmitteilung der Kennung auf dem Proxyserver entspricht.

3. Authentifizierungsverfahren nach einem der vorstehenden Ansprüche, **dadurch gekennzeichnet, dass** der Zugriff auf Speicherbereiche des Rechners durch einen rechnerlokalen Sicherheitsmechanismus gesperrt wird.

## Claims

1. Method for authenticating a user with an authentication server (400), in which the authentication server comprises:
- A memory zone for storing a registration associating:
∘ An identifier (420.1) of the user on the authentication server;
∘ An identifier (420.2) of the user on a proxy authentication server;
∘ A public key of a dual key (420.3);
the method making it possible to authenticate the user having at his disposal a calculator (100) comprising:
- A memory zone (120.1) for storing the private key of the dual key;
- A memory zone (120.2) for storing an identifier of the user on a notification server (200);
- A memory zone (120.3) for storing an identifier of the user on the proxy authentication server;
the authentication taking place through the proxy authentication server (300) comprising:
- A memory zone (320.1) for storing a registration associating:
∘ The identifier (320.1.1) of the user on the proxy authentication server;
∘ The identifier (320.1.2) of the user on the notification server;
the method comprising the following steps:
- Production (2000), by the authentication server, of a challenge message comprising:
∘ A random variable encrypted with the public key
∘ The identifier of the user on the proxy authentication server
- Sending (2010) the challenge message, by the authentication server, to the notification server, the authentication server receives in response a challenge token from the proxy authentication server;
- Production (2030 - 2040), by the proxy authentication server upon receipt (2020) of the challenge message sent by the authentication server:
∘ (2030) Of the challenge token, the challenge token being associated with the challenge message;
∘ (2040) Of a notification message comprising:
▪ The identifier of the user on the notification server;
▪ A notification token, produced by the proxy authentication server, the notification token being associated, on the proxy authentication server, with the challenge message;
- Sending (2050) the notification message, by the proxy authentication server, to the notification server;
- Delivery (2060) of the notification message by the notification server to the calculator;
- Production (2080) by the calculator, upon receipt (2070) of the notification message, of a challenge accepted message, the challenge accepted message comprising:
∘ The identifier of the user on the proxy authentication server;
∘ The identifier of the user on the notification server;
∘ The notification token;
- Sending (2090), by the calculator, the challenge accepted message to the proxy authentication server;
- Production (2110) by the proxy authentication server, upon receipt (2100) of the challenge accepted message, of a challenge message comprising:
∘ The encrypted random variable found thanks to the content of the challenge accepted message;
- Sending (2120), by the proxy authentication server, the challenge message to the calculator;
- Production (2140) by the calculator, upon receipt (2130) of the challenge message, of a response message comprising:
∘ The result of the decryption of the random variable encrypted by the use of the private key;
- Sending (2150), by the calculator, the response message to the proxy authentication server;
- Association (2170) by the proxy authentication server, upon receipt (2160) of the response message, of the result of the decryption and of the challenge token;
- Interrogation (2035) by the authentication server of the proxy authentication server to obtain the content of the response message associated with the challenge token;
- Comparison (2200) by the authentication server of the content of the response message with the random variable produced to determine the result of the authentication.

2. Authentication method according to claim 1, **characterized in that** the dual key, the user identifier on the proxy server, the user identifier on the notification server are produced during an enrollment of the calculator, said enrollment taking place as follows, the user having at his disposal the calculator and a secure terminal connected to the authentication server:
- The user registers himself (3000), with the calculator, on the notification server and obtains the user identifier on the notification server;
- The user uses (3010) the secure terminal to authenticate himself and to send an enrollment request message to the authentication server;
- Production (3030), by the authentication server upon receipt (3020) of an enrollment request message, of the following elements:
∘ A dual key associated with the user;
∘ An enrollment initiation message sent to the proxy authentication server;
- Implementation, by the proxy authentication server upon receipt (3040) of an enrollment initiation message, of the following actions:
∘ Creation (3050) of a registration associating:
▪ A user identifier on the proxy server;
▪ An enrollment token;
∘ Production (3060) of an initiated enrollment message comprising:
▪ The user identifier on the proxy server;
▪ The enrollment token;
∘ Sending (3070) the initiated enrollment message in response to the enrollment initiation message;
- Implementation, by the authentication server upon receipt (3080) of an enrollment initiation message, of the following actions:
∘ Production (3090) of an enrollment acceptance message comprising:
▪ At least the private key of the dual key;
▪ The enrollment token;
∘ Sending (3100) the enrollment acceptance message in response to the enrollment request message;
- Implementation by the secure terminal upon receipt (3110) of an enrollment acceptance message:
∘ Displaying (3120), on a screen of the secure terminal, the content of the message received;
- Acquisition (3130), by the calculator, of data displayed on the screen of the secure terminal;
- Implementation, by the calculator further to the acquisition (3130) of the data, of the following actions:
∘ Creation (3140) of a registration associating:
▪ At least the private key of the dual key
▪ The identifier of the user on the notification server
∘ Production (3150) of an enrollment finalization message comprising
▪ The enrollment token;
▪ The identifier on the notification server;
∘ Sending (3160) the enrollment finalization message to the proxy authentication server;
- Implementation, by the proxy server following the receipt (3170) of an enrollment finalization message, of the following actions:
∘ If (3180) a registration corresponds to the enrollment token of the finalization message then (3190):
× Association (3200) of the identifier on the notification server with the corresponding registration;
▪ Production (3210) of a finalized enrollment message comprising:
• The identifier on the proxy authentication server of the corresponding registration;
▪ Sending (3220) the finalized enrollment message in response to the message of finalization of registration;
▪ Sending (3230) an enrollment confirmation message to the authentication server;
▪ Deletion of the enrollment token;
- Implementation, by the calculator upon receipt (3250) of a finalized enrollment message, of the following actions:
∘ Association (3270) with the registration corresponding to the message of finalization of the registration of the identifier on the proxy server.

3. Authentication method according to one of the preceding claims **characterized in that** access to the memory zones of the calculator is locked by a security mechanism local to the calculator.
